(19) Europäisches Patentamt
European Patent Office
Office européen des brevets

(11) **EP 3 306 144 A1**

(12) **EUROPEAN PATENT APPLICATION**
published in accordance with Art. 153(4) EPC

(43) Date of publication:
**11.04.2018 Bulletin 2018/15**

(51) Int Cl.:
***F16H 61/02*** *(2006.01)*  ***F16H 61/662*** *(2006.01)*

(21) Application number: **16803032.8**

(22) Date of filing: **17.05.2016**

(86) International application number:
**PCT/JP2016/064542**

(87) International publication number:
**WO 2016/194597 (08.12.2016 Gazette 2016/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **05.06.2015 JP 2015115113**

(71) Applicants:
• **Jatco Ltd.
Shizuoka 417-8585 (JP)**
• **Nissan Motor Co., Ltd.
Yokohama-shi, Kanagawa 221-0023 (JP)**

(72) Inventors:
• **TAKAHASHI, Seiichiro
Fuji-shi
Shizuoka 417-8585 (JP)**
• **SUZUKI, Akito
Fuji-shi
Shizuoka 417-8585 (JP)**
• **YUDA, Naoki
Fuji-shi
Shizuoka 417-8585 (JP)**
• **SATANI, Ryouhei
Fuji-shi
Shizuoka 417-8585 (JP)**

(74) Representative: **Grünecker Patent- und
Rechtsanwälte
PartG mbB
Leopoldstraße 4
80802 München (DE)**

(54) **CONTROL DEVICE FOR CONTINUOUSLY VARIABLE TRANSMISSION**

(57)   Greater one of a secondary pressure comparison reference value (Psec_b) and a primary pressure comparison reference value (Ppri_b) is set as a line pressure target value (Plin_tg). At a vehicle constant speed travel control, a value obtained by adding a first offset amount (γ) to the secondary pressure target value (Psec_tg) is the secondary pressure comparison reference value (Psec_b) and a value obtained by adding a second offset amount (γ) to the primary pressure target value (Ppri_tg) is the primary pressure comparison reference value (Ppri_b). By setting a line pressure in this manner, an occurrence of fluctuation of an engine speed at during executing the vehicle constant speed travel control is suppressed.

**FIG.3**

EP 3 306 144 A1

**Description**

The present invention relates to a control device for a continuously variable transmission, and more particularly to a control device for the continuously variable transmission which is suitable to be used for control of a chain-type continuously variable transmission.

**Background Art**

A continuously variable transmission (CVT) mounted in a vehicle such as an automobile is configured by a primary pulley to which torque of a driving source is inputted, a secondary pulley which outputs the torque to a wheel and a power transmission member (a belt or a chain) which is wound around both these primary and secondary pulleys. Both of the primary and secondary pulleys each have a stationary pulley and a movable pulley which form a V-groove. The movable pulley is forced toward the stationary pulley by a primary pulley pressure (also called a primary pressure) and a secondary pulley pressure (also called a secondary pressure), each of which is produced with a line pressure being a source pressure. With this configuration, the power transmission member is sandwiched and held between the movable and stationary pulleys, then power is transmitted between the primary pulley and the secondary pulley.

The line pressure is produced with a discharge pressure f rom an oil pump being the source pressure. Since the oil pump is operated with an engine (an internal combustion engine) of the vehicle being a direct or an indirect driving source, height (magnitude) of the line pressure greatly influences fuel efficiency (gas mileage). If the line pressure is higher than necessary, friction at a rotating part or a sliding part in the transmission is increased. Therefore, a technique of improving the fuel efficiency by reducing the line pressure to a required pulley pressure, by reducing the discharge pressure of the oil pump and by reducing the friction has been proposed.

For instance, Patent Document 1 discloses as the technique that a primary pressure target value and a secondary pressure target value are set according to a vehicle operating condition, and a line pressure control valve is controlled such that the line pressure is either one of the primary pressure target value or the secondary pressure target value, which is higher one. In this case, there is no need to set the line pressure to a pressure that is equal to or greater than the higher pressure of the both pressure target values, and a power loss of the oil pump is suppressed, then the fuel efficiency can be improved.

Here, in the CVT, in order to secure control accuracy of a transmission ratio, a primary pressure sensor and a secondary pressure sensor that detect the primary pressure and the secondary pressure respectively are provided, and each of the primary and secondary pressures is accurately controlled while performing feedback of detected pressure values. However, regarding the line pressure, since the line pressure does not require as accurate a control as the primary pressure and the secondary pressure, in many cases, the line pressure is controlled by an open-loop control without providing the pressure sensor.

However, it was found that if a line pressure target value is set to the higher pressure (a higher side target value) of the primary pressure target value and the secondary pressure target value and the line pressure is controlled by the open-loop control by a line pressure command value corresponding to the line pressure target value, an engine speed varies or fluctuates, and this gives an odd or awkward feeling to a driver. As a result of analysis of this phenomenon, it was found that the engine speed fluctuates due to variation of the transmission ratio. Further, it was found that this phenomenon intensively occurs upon performing a constant speed travel control by auto-cruise (a cruise control) etc..

The present invention was made in view of such a problem. An object of the present invention is therefore to provide a control device for a continuously variable transmission which is capable of suppressing the occurrence of variation or fluctuation of the engine speed during the constant speed travel control, with the line pressure controlled by setting the line pressure target value on the basis of a greater value of the primary pressure target value and the secondary pressure target value.

**Citation List**

**Patent Document**

Patent Document 1 : Japanese Unexamined Patent Application Publication No. 2010-223281

**Summary of the Invention**

To achieve the above object, inventors of the present invention first analyzed a cause of the variation of the engine speed occurring during the constant speed travel control. As a consequence, a conjecture result obtained was that because up-and-down variation of an actual transmission ratio occurs and the constant speed travel control is carried out by and according to this up-and-down variation of the actual transmission ratio, an actual engine speed varies up and down.

In addition, it is conceivable that since the driver does not perform an accelerator pedal operation during a travel by the constant speed travel control, when the engine speed varies up and down, the driver is subjected to the extremely odd or awkward feeling, whereas during a normal travel in which the vehicle travels by driver's accelerator pedal operation, even if the engine speed varies up and down, the odd or awkward feeling to which the driver is subjected is small.

The present invention was made in view of such findings, and has the following configuration.

(1) A control device for a continuously variable transmission mounted in a vehicle, the continuously variable transmission having an input side primary pulley inputting power from an engine (an internal combustion engine), an output side secondary pulley and a power transmission member wound around these pulleys, the device comprises: a secondary pressure control unit configured to set a secondary pressure target value that is a target value of a secondary pressure supplied to the secondary pulley on the basis of a required torque transmission capacity and to control the secondary pressure according to the secondary pressure target value; a primary pressure control unit configured to set a primary pressure target value that is a target value of a primary pressure supplied to the primary pulley on the basis of a target transmission ratio and to control the primary pressure according to the primary pressure target value; and a line pressure control unit configured to set, as a line pressure target value that is a target value of a line pressure, greater one of a secondary pressure comparison reference value corresponding to the secondary pressure target value and a primary pressure comparison reference value corresponding to the primary pressure target value and to control the line pressure according to the line pressure target value, and the line pressure control unit is configured to set, at a vehicle constant speed travel control, the line pressure target value with a value obtained by adding a first offset amount to the secondary pressure target value being the secondary pressure comparison reference value and a value obtained by adding a second offset amount to the primary pressure target value being the primary pressure comparison reference value.

(2) It is preferable that except when executing the vehicle constant speed travel control, at least one of the secondary pressure comparison reference value and the primary pressure comparison reference value be set to be smaller than a value when executing the constant speed travel control.

(3) It is preferable that the line pressure control unit be configured such that, except when executing the vehicle constant speed travel control, a value obtained by adding the first offset amount to the secondary pressure target value is the secondary pressure comparison reference value, and a value obtained by adding the second offset amount that is equal to or less than the first offset amount and includes 0 to the primarypressure target value is the primary pressure comparison reference value.

(4) It is preferable that in a case where a difference between the secondary pressure target value and the primarypressure target value is equal to or greater than a predetermined value at a vehicle drive travel in which the power is inputted to the primary pulley, the line pressure target value be set with the second offset amount being 0 and the primary pressure target value itself being the primary pressure comparison reference value.

(5) It is preferable that in a case of a vehicle coast travel in which the power is not inputted to the primary pulley, or in a case where the difference is equal to or less than the predetermined value at the vehicle drive travel, the second offset amount be set to a value that is greater than 0.

(6) It is preferable that the line pressure control unit is configured such that, at the vehicle constant speed travel control, the offset amount to calculate the secondary pressure comparison reference value and the offset amount to calculate the primary pressure comparison reference value be a same value as each other.

(7) It is preferable that a chain be used as the power transmission member, and the continuously variable transmission be configured as a chain-type continuously variable transmission.

According to the present invention, at the vehicle constant speed travel control, the value obtained by adding the first offset amount to the secondary pressure target value is the secondary pressure comparison reference value and the value obtained by adding the second offset amount to the primary pressure target value is the primary pressure comparison reference value. Then, greater ane of the secondary pressure comparison reference value and the primary pressure comparison reference value is set as the line pressure target value. Therefore, the line pressure target value is greater than greater one of the secondary pressure target value and the primary pressure target value, and even if an actual line pressure is lower than the line pressure target value, the actual line pressure can be secured so as to achieve the primary pressure target value and the secondary pressure target value. With this, hunting of an actual transmission ratio, which is caused by the fact that the primary pressure target value and the secondary pressure target value are not achieved due to lack of the actual line pressure, can be suppressed, and hunting of an engine speed due to the hunting of the actual transmission ratio can also be suppressed. Accordingly, the odd or awkward feeling to which the driver is subjected due to the hunting of the engine speed can be suppressed.

Further, except when executing the vehicle constant speed travel control, by setting at least one of the secondary pressure comparison reference value and the primary pressure comparison reference value to be smaller than a value when executing the constant speed travel control, the line pressure target value can be decreased by this amount. It is therefore possible to decrease a discharge pressure from an oil pump which is a source pressure of the line pressure, and to save energy required to drive the oil pump. Further, by reducing the friction, fuel efficiency can be improved.

**Brief Description of Drawings**

[Fig. 1]

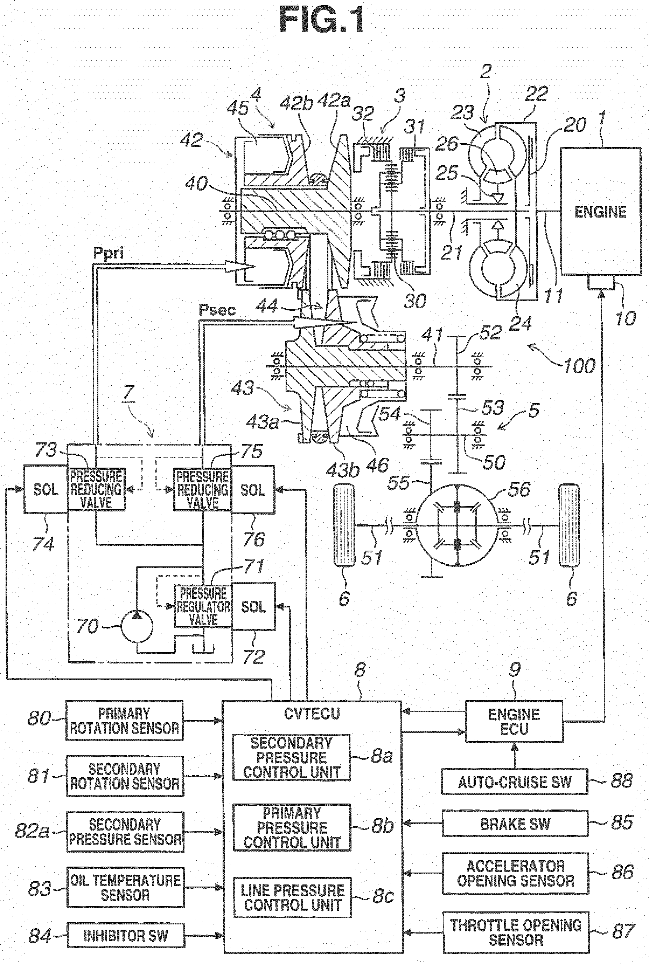

Fig. 1 is a general system diagram showing a driveline and a control system of an engine vehicle that employs a control device for a continuously variable transmission according to an embodiment of the present invention.
[Fig. 2]

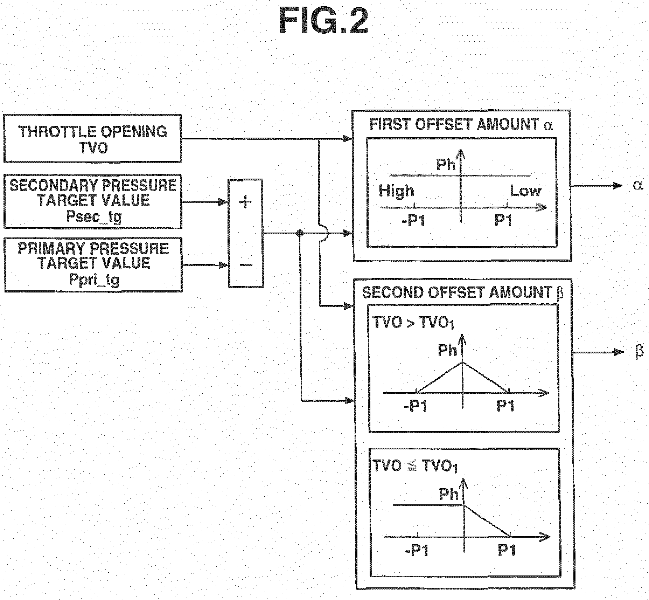

Fig. 2 is a control block diagram of the control device for the continuously variable transmission according to the embodiment of the present invention.
[Fig. 3]

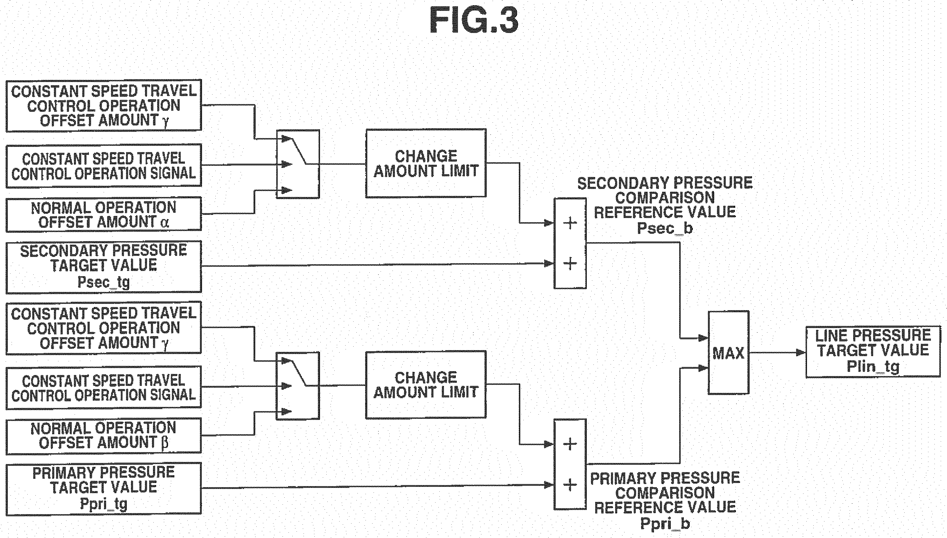

Fig. 3 is a control block diagram of the control device for the continuously variable transmission according to the embodiment of the present invention.
[Fig. 4]

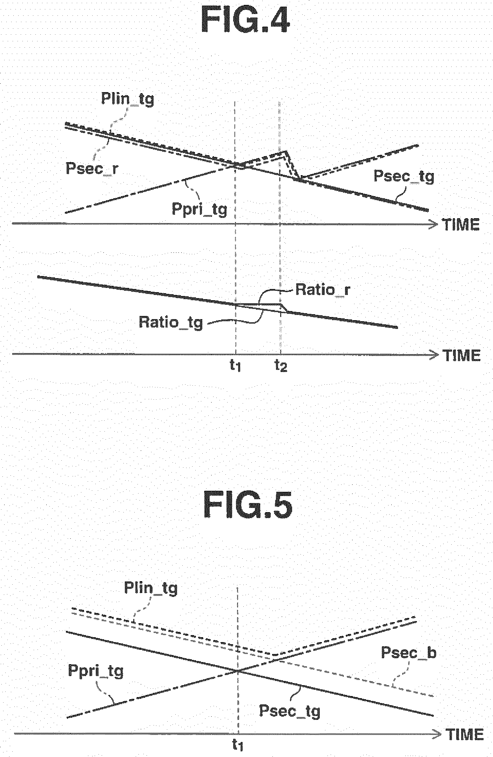

Fig. 4 is a time chart showing a change of each pressure value concerning a problem 1 (hunting of transmission ratio) of the control device for the continuously variable transmission according to the embodiment of the present invention.
[Fig. 5]
Fig. 5 is a time chart for explaining a setting of a line pressure target value by the control device for the continuously variable transmission according to the embodiment of the present invention.
[Fig. 6]

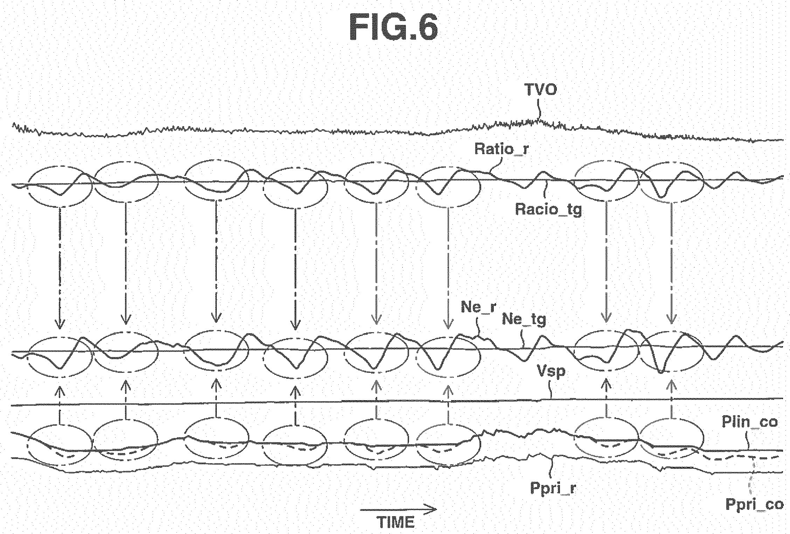

Fig. 6 is a time chart showing a change of each value concerning a problem 2 (variation in engine speed) of the control device for the continuously variable transmission according to the embodiment of the present invention.
[Fig. 7]

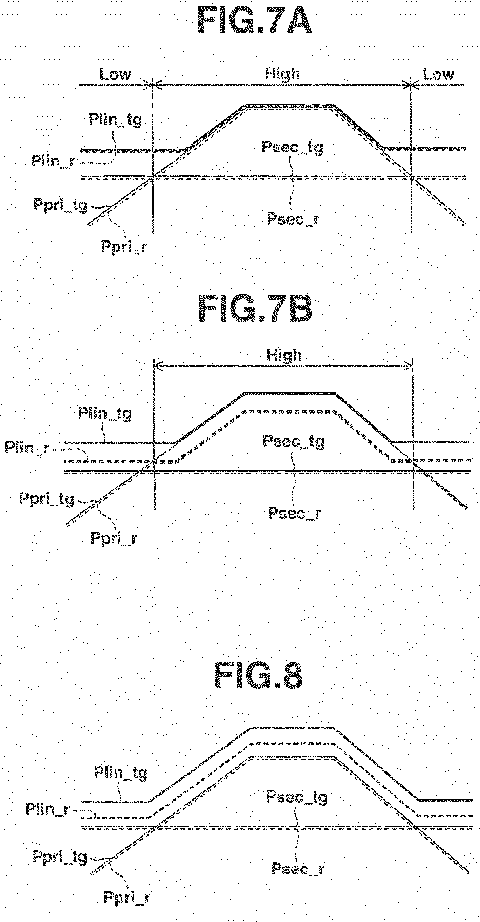

Figs. 7A and 7B are time charts showing a change of each pressure value concerning the problem 2 (variation in engine speed) of the control device for the continuously variable transmission according to the embodiment of the present invention. Fig. 7A shows a state in which an actual line pressure is normal. Fig. 7B shows a state in which the actual line pressure is abnormal.
[Fig. 8]
Fig. 8 is a time chart for explaining a setting of the line pressure target value by the control device for the continuously variable transmission according to the embodiment of the present invention.
[Fig. 9]

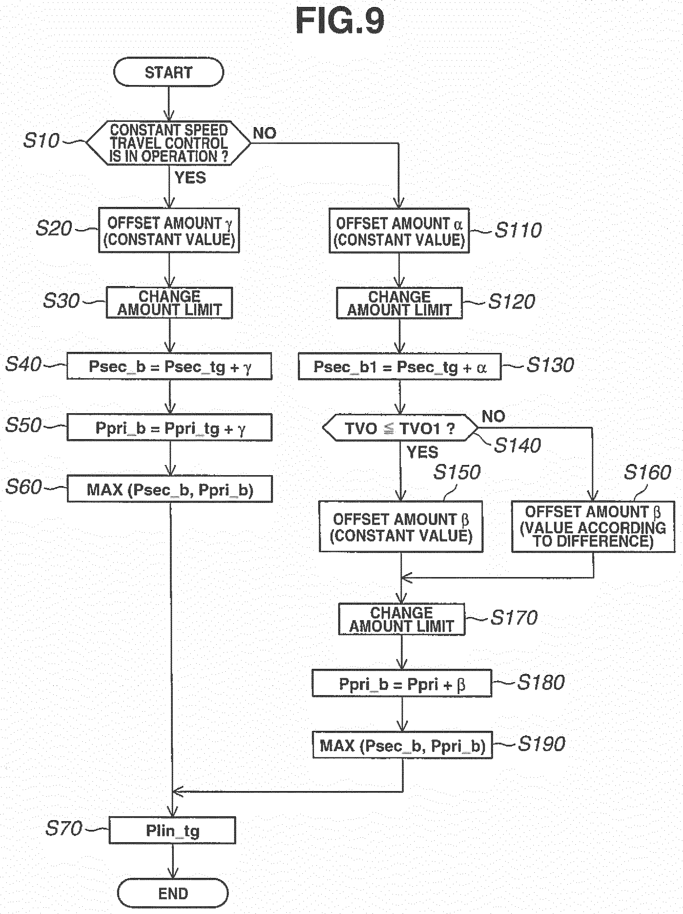

Fig. 9 is a flow chart of a line pressure control by the control device for the continuously variable transmission according to the embodiment of the present invention.

**Embodiments for carrying out the Invention**

In the following description, embodiments of the present invention will be explained with reference to the drawings. The embodiments are examples of the present invention, and these do not exclude various modifications and techniques which are not indicated in the embodiments. Each configuration of the embodiments could be realized also by being modified, combined each other, deleted or selected, as necessary.
In addition, in an after-described hydraulic pressure control, a line pressure, a primary pressure and a secondary pressure are controlled, and actual values of these pressures are called an actual line pressure, an actual primary pressure and an actual secondary pressure respectively. Regarding the actual secondary pressure, it is a value detected by a sensor. Further, the primary pressure, the secondary pressure and the line pressure are set to the respective target values, and these target values are called a primary pressure target value, a secondary pressure target value and a line pressure target value respectively.
Moreover, command values to command that the primary pressure and the secondary pressure become the primary pressure target value and the secondary pressure target value are called a primary pressure command value and a secondary pressure command value respectively. Also, a command value of the line pressure is called a line pressure command value.

[1. General system configuration]

Fig. 1 is a general system diagram showing a driveline and a control system of a vehicle that employs a control device according to the present embodiment.

As shown in Fig. 1, the driveline of the vehicle has an engine (an internal combustion engine) 1 as a driving source, a torque convertor 2 , a forward-reverse switching mechanism 3, a continuously variable transmission mechanism 4, a final speed reduction mechanism 5 and driving wheels 6, 6. Here, the torque convertor 2, the forward-reverse switching mechanism 3, the continuously variable transmission mechanism 4 and the final speed reduction mechanism 5 are accommodated in a transmission case, and this forms a continuously variable transmission 100 (hereinafter described as a CVT 100).

The engine 1 is provided with an output torque control actuator 10 that performs an output torque control by a throttle valve opening/closing operation and/or a fuel cut operation etc.. With this control, besides an output torque control by driver's accelerator operation, the engine 1 can be output-torque-controlled by an external engine control signal.

The torque convertor 2 is a starting element having a torque increase function. The torque convertor 2 has a lock-up clutch 20 that can directly connect an engine output shaft 11 (= a torque convertor input shaft) and a torque convertor output shaft 21 when the torque increase function is not required. The torque convertor 2 further has, as components, a pump impeller 23 directly connected to the engine output shaft 11 through a convertor housing 22, a turbine runner 24 directly connected to the torque convertor output shaft 21 and a stator 26 provided at a case through a one-way clutch 25.

The forward-reverse switching mechanism 3 is a mechanism that switches an input rotation direction to the continuously variable transmission mechanism 4 between a forward direction for forward travel and a reverse direction for reverse travel. This forward-reverse switching mechanism 3 has a planetary gear mechanism 30, a forward clutch 31 formed by a plurality of clutchplates and a reverse brake 32 formed by a plurality of brake plates. The planetary gear mechanism 30 is, for example, a double pinion planetary gear, and a sun gear is connected to the torque convertor output shaft 21 and a carrier is connected to a transmission input shaft 40. The forward clutch 31 is engaged during the forward travel, and directly connects the sun gear and the carrier of the planetary gear mechanism 30. The reverse brake 32 is engaged during the reverse travel, and fixes a ring gear of the planetary gear mechanism 30 to the case.

The continuously variable transmission mechanism 4 has a continuously variable transmission function that continuously varies a transmission ratio that is a ratio between an input rotation speed of the transmission input shaft 40 and an output rotation speed of a transmission output shaft 41 (i.e. a transmission input rotation speed/a transmission output rotation speed) by change of a contact diameter of a power transmission member to the pulley. The continuously variable transmission mechanism 4 of the present embodiment is a chain-type continuously variable transmission mechanism that has a primary pulley 42, a secondary pulley 43 and a chain 44 as the power transmission member and is controlled by a hydraulic pressure of working fluid (ATF; Automatic Transmission Fluid). Here, the continuously variable transmission mechanism 4 could be a belt-type continuously variable transmission mechanism using a belt as the power transmission member. However, in the case of the chain--type continuously variable transmission mechanism, since power can be transmitted by a large frictional force, the chain-type continuously variable transmission mechanism has the advantage in lessening a pressure margin (an offset amount) associated with a line pressure.

The primary pulley 42 is formed by a fixed pulley 42a and a slide pulley 42b. The slide pulley 42b moves (slides) in an axial direction by a primary pressure (also, called a primary pulley pressure) Ppri that is supplied in a primary pressure chamber 45. The secondary pulley 43 is formed by a fixed pulley 43a and a slide pulley 43b. The slide pulley 43b moves (slides) in an axial direction by a secondary pressure (also, called a secondary pulley pressure) Psec that is supplied in a secondary pressure chamber 46.

Sheave surfaces, which are facing surfaces, of the fixed pulley 42a and the slide pulley 42b of the primary pulley 42, and sheave surfaces, which are facing surfaces, of the fixed pulley 43a and the slide pulley 43b of the secondary pulley 43, each have a V-shaped surface. Pin portions at both sides of the chain 44 contact each of these sheave surfaces. That is, the chain 44 is wound around the V-shaped sheave surface of the primary pulley 42 and the V-shaped sheave surface of the secondary pulley 43. A winding radius of the chain 44, which is wound around both the primary pulley 42 and secondary pulley 43, is changed according to movement of the slide pulleys 42b and 43b, and thus the transmission ratio is varied.

The final speed reduction mechanism 5 is a mechanism that reduces a transmission output rotation from the transmission output shaft 41 of the chain-type continuously variable transmission mechanism 4 and transmits it to the right and left driving wheels 6, 6 with a differential function provided. This final speed reduction mechanism 5 has a first gear 52 provided at the transmission output shaft 41, a second gear 53 and a third gear 54 provided at an idler gear 50, a final speed reduction gear 55 and a differential gear 56 having the differential function, which are interposed between the transmission output shaft 41 and right and left drive shafts 51, 51.

As shown in Fig. 1, a control system of the CVT 100, in the control system of the vehicle, has a transmission hydraulic control unit 7 and a CVT electronic control unit 8 (a transmission control device, hereinafter called a CVTECU 8). Further, an engine control unit 9 (hereinafter called an engine ECU 9) that sends/receives information to/from this CVTECU 8 is provided. These electronic control units (ECU: Electronic Control Unit) 8, 9 are formed by an input/output device, a storage device (ROM, RAM etc.) that stores a plurality of control program, a central processing unit (CPU), a timer counter etc..

The hydraulic control unit 7 is a hydraulic control unit that produces the line pressure Plin, the primary pressure Ppri led to the primary pressure chamber 45 and the secondary pressure Psec led to the secondary pressure chamber 46. This hydraulic control unit 7 has an oil pump 70, a regulator valve 71, a line pressure solenoid 72, a primary pressure reducing valve 73 , a primary pressure solenoid 74, a secondary pressure reducing valve 75 and a secondary pressure solenoid 76.

In the present embodiment, the oil pump 70 is a mechanical pump driven by the engine 1. However, the oil pump 70 could be an electric pump driven by an electric motor. Also, both of the mechanical pump and the electric pump could be provided, then these are used according to the circumstances. If the oil pump 70 is the mechanical pump, the oil pump 70 uses power of the engine 1 directly. If the oil pump 70 is the electric pump, since power generated by power of the engine 1 is used, the oil pump 70 uses power of the engine 1 indirectly.

The regulator valve 71 is a valve that regulates the line pressure with a discharge pressure from the oil pump 70 being a source pressure. This regulator valve 71 is driven by the line pressure solenoid 72, and regulates a pressure that is pumped out and pressurized by the oil pump 70 to a predetermined line pressure according to a command from the CVT electronic control unit 8.

The primary pressure reducing valve 73 and the secondary pressure reducing valve 75 are valves that regulate the primary pressure Ppri and the secondary pressure Psec led to the primary pressure chamber 45 and the secondary pressure chamber 46 respectively with the line pressure produced by the regulator valve 71 being a source pressure. These primary pressure reducing valve 73 and secondary pressure reducing valve 75 are driven by the primary pressure solenoid 74 and the secondary pressure solenoid 76 respectively, and reduce the line pressure and control this line pressure to a predetermined primary pressure Ppri and a predetermined secondary pressure Psec according to a command from the CVT electronic control unit 8.

Sensors and switches, such as a primary rotation sensor 80 that detects a rotation speed (revolutions per unit time) Npri of the primary pulley 42, a secondary rotation sensor 81 that detects a rotation speed (revolutions per unit time) Nsec of the secondary pulley 43, a secondary pressure sensor 82a that detects the secondary pressure Psec, an oil temperature sensor 83 that detects a temperature OT of the working fluid, an inhibitor switch 84 that detects a shift position, a vehicle brake switch 85, a vehicle accelerator opening sensor 86 and a throttle opening sensor 87 of the engine 1, are connected to the CVT electronic control unit 8. The CVT electronic control unit 8 then inputs sensor information and switch information of these sensors and switches.

Further, the CVT electronic control unit 8 inputs torque information from the engine ECU 9, and outputs a torque request to the engine ECU 9. A detection value of the secondary pressure sensor 82a is used for each control in the CVT electronic control unit 8 after removing a minute (high-frequency) vibration element by an operation by a low-pass filter (not shown).

Furthermore, the vehicle is provided with a constant speed travel control (also called a cruise control or auto-cruise) by which the vehicle can travel at a constant speed without driver' s accelerator operation. That is, the engine ECU 9 controls the output torque control actuator 10 so as to keep a setting vehicle speed when a constant speed travel control switch (an auto-cruise switch) 88 is turned on. At this time, the CVTECU 8 controls the secondary pressure Psec according to an output torque, and controls the primary pressure Ppri so as to maintain a target transmission ratio.

The CVTECU 8 performs a line pressure control that outputs a predetermined control command (a line pressure command value) to the line pressure solenoid 72, a secondary pressure control that outputs a control command (a secondary pressure command value Psec_co) to gain a predetermined secondary pressure target value Psec_tg to the secondary pressure solenoid 76, a primary pressure control that outputs a control command (a primary pressure command value Ppri_co) to gain a predetermined primary pressure target value Ppri_tg to the primary pressure solenoid 74, a forward-reverse switching control that controls engagement/disengagement of the forward clutch 31 and the reverse brake 32, and so on.

The CVTECU 8 has, as function elements or components, a secondary pressure control unit (a secondary pressure control means) 8a that performs the control of the secondary pressure Psec, a primary pressure control unit (a primary pressure control means) 8b that performs the control of the primary pressure Ppri and a line pressure control unit (a line pressure control means) 8c that performs the control of the line pressure. A characteristic point of the device of the present invention is that, under a predetermined condition, the line pressure control unit 8c performs a same-pressure control that sets a target value Plin_tg of the line pressure Plin to the same pressure as the target value Psec_tg or the target value Ppri_tg of the pulley pressure (the secondary pressure Psec or the primary pressure Ppri).

First, setting of a basic secondary pressure command value Psec_co, a basic primary pressure command value Ppri_co and a basic line pressure command value Plin_co will be explained.
The secondary pressure control unit 8a calculates a torque capacity transmitted by the chain-type continuously variable transmission mechanism 4, derives the secondary pressure target value Psec_tg from this transmission torque capacity and sets the secondary pressure command value Psec_co on the basis of information from the engine ECU 9,. The secondary pressure command value Psec_co is set by adding a feedback correction amount based on the actual secondary pressure Psec detected by the secondary pressure sensor 82a to the secondary pressure target value Psec_tg.

The primary pressure control unit 8b gets information of the target transmission ratio from the engine ECU 9 and sets the primary pressure target value Ppri_tg from this target transmission ratio, an actual transmission ratio (which is calculated from the rotation speed Npri of the primary pulley 42 and the rotation speed Nsec of the secondary pulley 43) and the secondary pressure command value Psec_co. The primary pressure command value Ppri_co is set by adding a feedback correction amount based on a difference between the target transmission ratio and the actual transmission ratio to the primary pressure target value Ppri_tg. Here, in the present embodiment, the primary pressure is controlled on the basis of the primary pressure target value to which such feedback correction amount is added. However, instead of this, the primary pressure could be controlled on the basis of the primary pressure target value Ppri_tg without adding the feedback correction amount.

The line pressure control unit 8c sets the line pressure target value Plin_tg on the basis of the secondary pressure target value Psec_tg and the primary pressure target value Ppri_tg. The line pressure control unit 8c controls the line pressure Plin by open-loop control, and sets a line pressure command value Plin_co to the same value as this line pressure target value Plin_tg (in the present embodiment, although the line pressure command value Plin_co and the line pressure target value Plin_tg are set to the same value, these values are not limited to the same value, and the line pressure control unit 8c can set the line pressure target value Plin_tg on the basis of the secondary pressure target value Psec_tg and the primary pressure target value Ppri_tg). Since the device of the present invention is characterized by this line pressure control, the line pressure control will be explained in detail in the following description.

[2. Line pressure control]

In this line pressure control, as described below, on the basis of the secondary pressure target value Psec_tg and the primary pressure target value Ppri_tg, either one of a value Psec_b (= Psec_tg + $\alpha$, this is called "a secondary pressure comparison reference value") set by adding a pressure margin (a first offset amount) $\alpha$ to the secondary pressure target value Psec_tg or a value Ppri_b (= Ppri_tg + $\beta$, this is called "a primary pressure comparison reference value") set by adding a pressure margin (a second offset amount) $\beta$ to the primary pressure target value Ppri_tg, which is greater one, is set as the line pressure target value Plin_tg. An adding operation of these pressure margins $\alpha$, $\beta$ is also called a line pressure offset, and the pressure margin $\alpha$ is called the first offset amount, and the pressure margin $\beta$ is called the second offset amount (each offset amount that is the pressure margin is equal to or greater than zero) .

$$\text{Plin\_tg} = \text{MAX} \; [(\text{Psec\_tg} + \alpha), \; (\text{Ppri\_tg} + \beta)]$$
$$= \text{MAX} \; [\text{Psec\_b}, \; \text{Ppri\_b}]$$

Here, since the line pressure Plin is produced with the discharge pressure from the oil pump 70 being the source pressure and the oil pump 70 uses the power of the engine 1 directly or indirectly, the higher the line pressure Plin is, the more the fuel efficiency (the gas mileage) is decreased. Further, if the line pressure Plin is higher than necessary, since friction at a rotating part or a sliding part in the CVT 100 is increased, it is desirable that the line pressure Plin should be decreased as much as possible. As the pressure margins $\alpha$, $\beta$ are set to be smaller, the line pressure target value Plin_tg can be decreased, and this is effective in improving the fuel efficiency and reducing the friction. If the pressure margins $\alpha$, $\beta$ can be zero, the line pressure target value Plin_tg can be decreased the most.

However, if the pressure margins $\alpha$, $\beta$ are set to be small (set to, e.g. "zero"), the following problems 1 and 2 arise.

Therefore, the device of the present invention is configured to suppress the line pressure Plin by setting the pressure margins $\alpha$, $\beta$ to be as small as possible while solving the problems 1 and 2.

In the following description, the problems 1 and 2 and a method of solving the problems 1 and 2 by the device of the present invention will be explained.

[2.1 Problem 1 of line pressure control (hunting of transmission ratio)]

If the line pressure target value Plin_tg (the line pressure command value Plin_co) is set to the same value as one pulley pressure target value of the secondary pressure target value Psec_tg and the primary pressure target value Ppri_tg, faulty pressure regulation might occur, and there arises a problem of generating hunting of the transmission ratio at this time.

Fig. 4 is a time chart, based on data by an actual device, schematically showing an example of each time progression of the secondarypressure target value Psec_tg, the primary pressure target value Ppri_tg, the line pressure target value Plin_tg, an actual secondary pressure Psec_r, a target transmission ratio Ratio_tg and an actual transmission ratio Ratio_r in a situation (at an auto-up) where this phenomenon occurs. Here, the pressure margins $\alpha$, $\beta$ are zero, and the line pressure target value Plin_tg is set to a same value as a greater one of the secondary pressure target value Psec_tg and the primary pressure target value Ppri_tg. Further, the "auto-up" mainly indicates a speed change mode to an up-shift side by a change of vehicle speed, such as a case where an up-shift change is carried out at an almost constant accelerator opening APO by and according to increase in a vehicle speed Vsp.

As shown in Fig. 4, there is a case where the auto-up is carried out so that by a shift of the transmission ratio Ratio to a High side from a state in which the secondary pressure target value Psec_tg is greater than the primary pressure target value Ppri_tg and the line pressure target value Plin_tg is set to the same value as the secondary pressure target value Psec_tg, the secondary pressure target value Psec_tg is gradually decreased and the primary pressure target value Ppri_tg is gradually increased, then the primary pressure target value Ppri_tg is greater than the secondary pressure target value Psec_tg at a cross point of time t1.

In a case of such shift (such speed change), the line pressure target value Plin_tg having been set to the same value as the secondary pressure target value Psec_tg until time t1 is set to the same value as the primary pressure target value Ppri_tg from time t1, and is increased with increase of the primary pressure target value Ppri_tg from time t1. Since the secondary pressure target value Psec_tg is gradually decreased, the actual secondary pressure Psec_r should also be gradually decreased so as to follow along the secondary pressure target value Psec_tg. However, in actual fact, as shown by a two-dot chain line, a phenomenon in which the actual secondary pressure Psec_r is increased by and according to increase of the line pressure target value Plin_tg occurs.

This cause will be conjectured. In a case where an actual line pressure Plin_r is lower than the line pressure command value Plin_co even by a slight amount, if the line pressure target value Plin_tg (= the line pressure command value Plin_co) is made identical to the secondary pressure target value Psec_tg, since the actual secondary pressure Psec_r is limited by the actual line pressure Plin_r, the actual secondary pressure Psec_r is always equal to or less than the secondary pressure target value Psec_tg. Therefore, the secondary pressure command value Psec_co to bring the actual secondary pressure Psec_r close to the secondary pressure target value Psec_tg is always equal to or greater than the actual secondary pressure Psec_r. Because of this, the secondary pressure reducing valve 75 is always pressed to a maximum pressure state. It is conceivable that when the line pressure command value Plin_co is increased and the actual line pressure Plin_r is increased in this state, the secondary pressure reducing valve 75 having been pressed to the maximum pressure state cannot immediately perform a pressure-decrease operation, and the actual secondary pressure Psec_r is increased by and according to increase of the actual line pressure Plin_r.

In this manner, when the actual secondary pressure Psec_r, which should intrinsically be decreased, is increased, even if the target transmission ratio Ratio_tg is shifted to a high speed side, the actual transmission ratio Ratio_r is not shifted to the high speed side. Subsequently, when the secondary pressure reducing valve 75 is returned to a correctly-operable pressure regulation state at time t2, the actual secondary pressure Psec_r is abruptly decreased, and the actual transmission ratio Ratio_r is shifted to the high speed side. Then, a transmission ratio feedback reacts to this abrupt shift to the high speed side, and decreases the primary pressure target value Ppri_tg. Since the line pressure target value Plin_tg is made identical to the primary pressure target value Ppri_tg at this time, when the primary pressure target value Ppri_tg is decreased, the line pressure target value Plin_tg is also decreased. In this manner, it is conceivable that variation in the transmission ratio (hunting of the transmission ratio) occurs around a same pressure region where all of the line pressure target value Plin_tg, the secondarypressure target value Psec_tg and the primary pressure target value Ppri_tg are substantially the same as or similar to each other.

Such hunting of the transmission ratio occurs at a cross point at which the secondary pressure target value Psec_tg and the primary pressure target value Ppri_tg are vertically inverted and the line pressure target value Plin_tg is changed from one of the secondary pressure target value Psec_tg and the primary pressure target value Ppri_tg to the other, i.e. around the same pressure region where all of the line pressure target value Plin_tg, the secondary pressure target value Psec_tg and the primary pressure target value Ppri_tg are substantially the same as or similar to each other. And, this hunting of the transmission ratio occurs not only at the auto-up shift, but also at another shift.

That is, besides the auto-up shift, the hunting of the transmission ratio also occurs, for instance, at a coast down shift that is a down shift carried out by and according to decrease in the vehicle speed during a coast travel in which the driver does not perform the accelerator operation. At the coast down shift, by the fact that the primary pressure Ppri is induced by the line pressure Plin at a cross point at which the line pressure target value Plin_tg is changed from the primary pressure target value Ppri_tg to the secondary pressure target value Psec_tg, there is a case where the down shift is delayed and an engine speed is decreased. At the worst, it might be required to release the lock-up clutch.

As measures to suppress such hunting of the transmission ratio, in the device of the present invention, the line pressure target value Plin_tg is offset high by a predetermined offset amount with respect to the pulley pressure target value in a region (Ppri $\fallingdotseq$ Psec) where the primary pressure Ppri and the secondary pressure Psec are close to each other by taking individual variations of the hydraulic control unit 7 into account. As the of f set amount in this case, in order to suppress decrease in the fuel efficiency, the line pressure command that does not cause the faulty pressure regulation is required while lowering the line pressure Plin as much as possible, then the offset amount is set to a predetermined amount (e.g. 0.3Mpa).

Further, this measure to set the line pressure target value Plin_tg to be high with respect to the pulley pressure target value is taken especially in a situation where suppression of the hunting of the transmission ratio is required. With this, the line pressure target value Plin_tg is not raised as much as possible. That is, during the auto-up and the coast down, there is a risk that the hunting of the transmission ratio will occur around the region where all of the line pressure target value Plin_tg, the secondary pressure target value Psec_tg and the primary pressure target value Ppri_tg are substantially the same as or similar to each other, and the suppression measures are required to be taken at this timing.

[2.2 Measures to suppress hunting of transmission ratio]

From such a viewpoint, for instance, as an auto-up time measure, the first offset amount $\alpha$ is increased before the cross point of the primary pressure Ppri, the secondary pressure Psec and the line pressure Plin, and the secondary pressure comparison reference value (= Psec_tg + $\alpha$) is offset with respect to the secondary pressure target value Psec_tg. However, due to the fact that an actual pulley pressure is affected by the actual line pressure even if the offset is carried out, it might be impossible to prevent the transmission ratio from being shifted. Further, as a coast down time measure, the second offset amount $\beta$ is increased before the cross point of the primary pressure Ppri, the secondary pressure Psec and the line pressure Plin, and the primary pressure comparison reference value (= Ppri_tg + $\beta$) is offset with respect to the primary pressure target value Ppri_tg. However, similar to the above, it might be impossible to prevent the transmission ratio from being shifted.

To eliminate this hunting of the transmission ratio, the offset amount $\alpha$ or $\beta$ is set to a large value. However, meanwhile, the line pressure command value Plin_co (= the line pressure target value Plin_tg) is suppressed as low as possible to avoid decrease in the fuel efficiency.

Thus, in a situation where when the offset amount $\alpha$ or $\beta$ is set to the large value, large decrease in the fuel efficiency occurs, the offset amount $\alpha$ or $\beta$ is set to zero or a minute value. In a situation where when the offset amount $\alpha$ or $\beta$ is set to the large value, large decrease in the fuel efficiency is unlikely to occur, the offset amount $\alpha$ or $\beta$ is set to the large value.

In a normal travel, a state in which the secondary pressure Psec is higher than the primary pressure Ppri (Psec > Ppri) is a few states, and even if the offset amount $\alpha$ that is applied to the secondary pressure Psec is increased, decrease in the fuel efficiency is small. Therefore, the offset amount $\alpha$ is set to the large value. On the other hand, a state in which the primary pressure Ppri is higher than the secondary pressure Psec (Ppri > Psec) is many states, and if the offset amount $\beta$ that is applied to the primary pressure Ppri is increased, large decrease in the fuel efficiency occurs. Therefore, the offset amount $\beta$ is set to as small a value as possible.

[2.2.1 Measures to suppress hunting of transmission ratio at time of auto-up]

When taking only the auto-up time measure in consideration, the first offset amount $\alpha$ is increased at apinpoint before the cross point of theprimarypressure Ppri, the secondary pressure Psec and the line pressure Plin, and the secondary pressure comparison reference value (=Psec_tg+$\alpha$) is of f set with respect to the secondary pressure target value Psec_tg.

However, even if the offset amount $\alpha$ that is applied to the secondary pressure Psec is increased, an influence on the fuel efficiency is small. Therefore, as shown in a block diagram of the first offset amount $\alpha$ in Fig. 2 and in Fig. 5, the offset amount $\alpha$ that is applied to the secondary pressure Psec is set to a large value over the full range (all regions). Here, in Fig. 2, Ph is a predetermined pressure value (e.g. 0.3Mpa), and P1 is a predetermined pressure difference (e.g. 0.3Mpa) between the secondary pressure target value Psec_tg and the primary pressure target value Ppri_tg.

[2.2.2 Measures to suppress hunting of transmission ratio at time of coast down]

When taking only the coast down time measure in consideration, the second offset amount $\beta$ is increased in a certain range (a certain region) before and after the cross point of the primary pressure Ppri, the secondary pressure Psec and the line pressure Plin, and the primary pressure comparison reference value (= Ppri_tg + $\beta$) is offset with respect to the primary pressure target value Ppri_tg.

However, when the offset amount $\beta$ that is applied to the primary pressure Ppri is increased, the influence on the fuel efficiency is large. However, in a case where a throttle opening degree TVO is extremely small (TVO $\leqq$ TVO1, including a coast travel of TVO = 0), even if the offset amount $\beta$ is increased, since the influence on the fuel efficiency is small, as shown in a block diagram of TVO $\leqq$ TVO1 of the second offset amount $\beta$ in Fig. 2, the offset amount $\beta$ that

is applied to the primary pressure Ppri is set to a large value over the full range (all regions) where the primary pressure Ppri is equal to or greater than the secondary pressure Psec. In this case, when the primary pressure Ppri is equal to or less than the secondary pressure Psec, the offset amount β is set according to a difference ΔP_tg (= Psec_tg - Ppri_tg) only in a certain range (a certain region) before and after the cross point. In this case, the offset amount β is gradually increased or decreased according to the difference ΔP-tg, and the of f set amount β smoothly follows a change of the difference ΔP_tg.

On the other hand, when the throttle opening degree TVO is a certain value or greater (TVO > TVO1), since the influence on the fuel efficiency is large, as shown in a block diagram of TVO > TVO1 of the second offset amount β in Fig. 2, the offset amount β is set according to the difference ΔP_tg (= Psec_tg - Ppri_tg) such that the smaller the difference ΔP_tg is, the greater value the offset amount β is set to only in a certain range (a certain region) before and after the cross point. And, the offset amount β is gradually increased or decreased according to the difference ΔP_tg, and the offset amount β smoothly follows a change of the difference ΔP_tg.

[2.3. Problem 2 of line pressure control (variation in engine speed)]

As explained in "Background Art", there is a problem of giving the odd or awkward feeling to the driver due to the up-and-down fluctuation (variation) of the engine speed especially during the vehicle travel by the constant speed travel control by the auto-cruise (the cruise control) etc..

Regarding the cause of this up-and-down fluctuation of the engine speed, as a result of the analysis, as explained in "Summary of the Invention", it was found that the fluctuation of the engine speed occurs due to the occurrence of the up-and-down variation of the actual transmission ratio Ratio_r. Further, it was also found that such hunting phenomena of the actual transmission ratio Ratio_r and an actual engine speed Ne_r occur in a case where the actual line pressure Plin_r is lower than the line pressure command value Plin_co.

Here, analysis of the cause of the fluctuation of the engine speed which occurs during the constant speed travel control will be explained.

Fig. 6 is a time chart showing waveform of time-variation of each measurement value or calculation value of the actual transmission ratio (calculation value) Ratio_r, the actual engine speed Ne_r, the throttle valve opening degree TVO, the target transmission ratio Ratio_tg, a target engine speed Ne_tg, the vehicle speed Vsp, the line pressure command value Plin_co, the primary pressure command value Ppri_co and the actual line pressure Plin_r, during the constant speed travel control in a case where the line pressure is controlled with the line pressure target value set on the basis of a high pressure side target value.

In the analysis, the target transmission ratio Ratio_tg is high side (i.e. the primary pressure command value Ppri_co > the secondary pressure command value Psec_co), and the line pressure target value Plin_tg is set to the same value as the primary pressure target value Ppri_tg. Since the line pressure Plin is controlled by open-loop control, although the line pressure command value Plin_co is made identical to the line pressure target value Plin_tg, the primary pressure Ppri is controlled by a feedback control based on a difference between the target transmission ratio and the actual transmission ratio.

As shown in Fig. 6, although the vehicle speed Vsp is constant, as shown by dashed line circles, the actual transmission ratio Ratio_r fluctuates up and down (the hunting occurs), and the actual engine speed Ne_r fluctuates up and down (the hunting occurs) by and according to the fluctuation of the actual transmission ratio Ratio_r. From this result, it was found that the fluctuation of the engine speed is caused by the fluctuation of the actual transmission ratio Ratio_r. Further, it was found that such hunting phenomena of the actual transmission ratio Ratio_r and the actual engine speed Ne_r occur in a case where the actual line pressure Plin_r is lower than the line pressure command value Plin_co. Here, due to the individual variations of the hydraulic control unit 7, there is a case where the actual line pressure Plin_r is not raised according to the line pressure command value Plin_co.

When the actual line pressure Plin_r is lower than the line pressure command value Plin_co, since an actual primary pressure Ppri_r is limited by the actual line pressure Plin_r, the actual primary pressure Ppri_r becomes the same pressure as the actual line pressure Plin_r. Here, when the actual transmission ratio Ratio_r is lowered to a high speed side with respect to the target transmission ratio Ratio_tg, an operation that returns the actual transmission ratio Ratio_r to the target transmission ratio Ratio_tg by decreasing the primary pressure target value Ppri_tg is performed. Here, the line pressure target value Plin_tg (= the line pressure command value Plin_co) is also decreased with the decrease of the primary pressure target value Ppri_tg.

Although the primary pressure command value Ppri_co is decreased by and according to the decrease of the primary pressure target value Ppri_tg, the actual primary pressure Ppri_r limited by the actual line pressure Plin_r is not changed until the primary pressure command value Ppri_co becomes the actual line pressure Plin_r or less. Therefore, the return of the actual transmission ratio Ratio_r to the target transmission ratio Ratio_tg is delayed, and the actual transmission ratio Ratio_r is further lowered to the high speed side with respect to the target transmission ratio Ratio_tg.

The primary pressure command value Ppri_co is decreased with respect to the primary pressure target value Ppri_tg (i. e. the line pressure target value Plin_tg (= the line pressure command value Plin_co)) by and according to cumulation of a difference between the primary pressure target value Ppri_tg and the actual. primary pressure Ppri_r. Then, when the primary pressure command value Ppri_co becomes the actual line pressure Plin_r or less, decrease of the actual primary pressure Ppri_r starts for the first time, and the return of the actual transmission ratio Ratio_r to the target transmission ratio Ratio_tg starts.

That is, it is conjectured that in the case where the actual line pressure Plin_r is lower than the line pressure command value Plin_co, the up-and-down variation (the up-and-down fluctuation) of the actual transmission ratio Ratio_r occurs, then, since the constant speed travel control is carried out, the actual engine speed Ne_r fluctuates up and down.

Figs. 7A and 7B are drawings for explaining an influence of the individual variations of the hydraulic control unit 7. As shown in Fig. 7A, if there is no influence of the individual variations of the hydraulic control unit 7, since the actual line pressure Plain_r is raised according to the line pressure command value Plin_co, even if the actual primary pressure Ppri_r is limited by the actual line pressure Plin_r, the actual primary pressure Ppri_r can be identical to the primary pressure command value Ppri_co without a hitch.

However, as shown in Fig. 7B, when the actual line pressure Plin_r is shifted to a lower side with respect to the line pressure command value Plin_co by the influence of the individual variations of the hydraulic control unit 7, since the actual primary pressure Ppri_r is limited by the actual line pressure Plin_r, the actual primary pressure Ppri_r cannot be identical to the primary pressure command value Ppri_co in a state of a high side transmission ratio in which the primary pressure target value Ppri_tg is greater than the secondary pressure target value Psec_tg. Then, as described above, the up-and-down variation of the actual transmission ratio Ratio_r occurs, and the actual engine speed Ne_r fluctuates up and down by and according to the up-and-down variation of the actual transmission ratio Ratio_r during the constant speed travel control.

[2.4. Measures to suppress fluctuation of engine speed]

Accordingly, in the present invention, the device obtains information as to whether the constant speed travel control is executed from the engine ECU 9. Then, if the constant speed travel control is executed, as shown in Fig. 8, the pressure margin (the second offset amount) of the primary pressure comparison reference value Ppri_b is always an offset amount $\gamma$ that is a certain value or greater, and the primary pressure target value Ppri_tg is set to a value (= Ppri_tg + $\gamma$) that is offset from the primary pressure target value Ppri_tg by this offset amount $\gamma$. Likewise, also regarding the secondary pressure comparison reference value Psec_b, its pressure margin (the first of f set amount) is always an of f set amount $\gamma$ that is a certain value or greater, and the secondary pressure target value Psec_tg is set to a value (= Psec _tg + $\gamma$) that is offset from the secondary pressure target value Psec_tg by this offset amount $\gamma$. The present embodiment, this offset amount $\gamma$ during execution of the constant speed travel control is set to the same value as the above-mentioned first offset amount $\alpha$. However, these offset amounts $\gamma$ and $\alpha$ could be set to different values.

Fig. 3 is a control block diagram to set the line pressure target value Plin_tg. As shown in Fig. 3, on the basis of a constant speed travel control signal, the offset amount $\gamma$ and the offset amounts $\alpha$ and $\beta$ are selected and used, and the primary pressure comparison reference value Ppri_b and the secondary pressure comparison reference value Psec_b are calculated. Then, greater one of the primary pressure comparison reference value Ppri_b and the secondary pressure comparison reference value Psec_b is set as the line pressure target value Plin_tg (= the line pressure command value Plin_co). Here, in order that the offset amount does not abruptly change upon change of the offset amount $\gamma$ and the offset amounts $\alpha$ and $\beta$, for instance, a temporary delay operation or a change amount limiting operation such as a change amount limiter process is performed.

Accordingly, in the device of the present invention, at the constant speed travel control of the vehicle, a value obtained by adding the offset amount $\gamma$ to the secondary pressure target value Psec_tg is the secondary pressure comparison reference value Psec_b, and a value obtained by adding the offset amount $\gamma$ to the primary pressure target value Ppri_tg is the primary pressure comparison reference value Ppri_b. Then, greater one of these primary pressure comparison reference value Ppri_b and secondary pressure comparison reference value Psec_b is set as the line pressure target value Plin_tg (= the line pressure command value Plin_co). Further, except when executing the vehicle constant speed travel control, if the offset amount $\beta$ is 0, the primary pressure comparison reference value Ppri_b is set to be smaller than a value when executing the constant speed travel control.

[3. Operation and effect]

The control device for the continuously variable transmission according to the embodiment of the present invention is configured as described above. Therefore, for instance, the line pressure target value Plin_tg is set as shown in Fig. 9.

That is, a judgment is made as to whether or not the constant speed travel control of the vehicle is executed (step S10). If the constant speed travel control of the vehicle is executed, the offset amount for calculation of the primary pressure comparison reference value Ppri_b and the secondary pressure comparison reference value Psec_b is set to γ (step S20). Further, in order that the offset amount does not abruptly change upon change of the offset amount γ and the offset amounts α and β, the change amount limiting operation is performed (step S30).

Then, by adding the offset amount γ having been subjected to the change amount limiting operation to the secondary pressure target value Psec_tg, the secondary pressure comparison reference value Psec_b is calculated (step S40). Further, by adding the offset amount γ having been subjected to the change amount limiting operation to the primary pressure target value Ppri_tg, the primary pressure comparison reference value Ppri_b is calculated (step S50).

Subsequently, greater one of the secondary pressure comparison reference value Psec_b and the primary pressure comparison reference value Ppri_b is selected (step S60), and this selected value is set as the line pressure target value Plin_tg (step S70).

On the other hand, if the constant speed travel control of the vehicle is not executed, the offset amount for calculation of the secondary pressure comparison reference value Psec_b is set to α (step S110). Further, in order that the offset amount does not abruptly change upon change of the offset amount γ and the offset amounts α and β the change amount limiting operation is performed (step S120). Then, by adding the offset amount α having been subjected to the change amount limiting operation to the secondary pressure target value Psec_tg, the secondary pressure comparison reference value Psec_b is calculated (step S130).

Further, a judgment is made as to whether or not the throttle opening degree TVO is equal to or less than a minute reference value TVO1 (steepS140). If the throttle opening degree TVO is equal to or less than the minute reference value TVO1 (mainly, in a coast travel state), as shown in Fig. 2, the offset amount β that is applied to the primary pressure Ppri is set to a large value over the full range (all regions) where the primary pressure Ppri is equal to or greater than the secondary pressure Psec. And, when the primary pressure Ppri is equal to or less than the secondary pressure Psec, the offset amount β is set according to a difference ΔP_tg (= Psec_tg - Ppri_tg) only in a certain range (a certain region) before and after the cross point (step S150).

On the other hand, if the throttle opening degree TVO is greater than the reference value TVO1, as shown in Fig. 2, the offset amount β is set according to the difference ΔP_tg (= Psec_tg - Ppri_tg) only in a certain range (a certain region) before and after the cross point (step S160). Further, in order that the offset amount does not abruptly change upon change of the offset amount γ and the offset amounts α and β the change amount limiting operation is performed (step S170). Then, by adding the offset amount β having been subjected to the change amount limiting operation to the primary pressure target value Ppri_tg, the primary pressure comparison reference value Ppri_b is calculated (step S180).

Subsequently, greater one of the secondary pressure comparison reference value Psec_b and the primary pressure comparison reference value Ppri_b is selected (step S190), and this selected value is set as the line pressure target value Plin_tg (step S70).

In this manner, at the operation of the constant speed travel control, the secondary pressure comparison reference value Psec_b and the primary pressure comparison reference value Ppri_b are calculated with the offset amount γ provided, and greater one of these secondary pressure comparison reference value Psec_b and primary pressure comparison reference value Ppri_b is set as the line pressure target value Plin_tg. Therefore, even when the actual line pressure Plin_r is shifted to a lower side with respect to the line pressure command value Plin_co by the influence of the individual variations of the hydraulic control unit 7, the actual primary pressure Ppri_r and the actual secondary pressure Psec_r can reach the primary pressure target value Ppri_tg and the secondary pressure target value Psec_tg respectively, thereby suppressing the occurrence of the up-and-down fluctuation (variation) of the actual transmission ratio Ratio_r and suppressing the occurrence of the up-and-down fluctuation (variation) of the actual engine speed Ne_r which is caused by the fluctuation (variation) of the actual transmission ratio Ratio_r. It is therefore possible to eliminate the odd or awkward feeling to which the driver is subjected due to the up-and-down fluctuation (variation) of the engine speed.

Further, since the offset amount α that is applied to the secondary pressure Psec is always a large value, it is possible to prevent the values of the primary pressure Ppri, the secondary pressure Psec and the line pressure Plin from being substantially the same as or similar to each other around the cross point of the primary pressure Ppri, the secondary pressure Psec and the line pressure Plinattheauto-up. The hunting of the transmission ratio at the auto-up can thus be suppressed. In addition, since the offset amount α is always the large value, the hunting of the transmission ratio due to change of the offset amount can be suppressed.

Furthermore, when the offset amount β that is applied to the primary pressure Ppri is increased, the influence on the fuel efficiency is large. However, since the offset amount β is set to be great according to the difference ΔP_tg (= Psec_tg - Ppri_tg) at least in the certain range (the certain region) before and after the cross point, it is possible to prevent the values of the primary pressure Ppri, the secondary pressure Psec and the line pressure Plin from being substantially the same as or similar to each other around the cross point of the primary pressure Ppri, the secondary pressure Psec and the line pressure Plin at the coast down. The hunting of the transmission ratio at the coast down can thus be suppressed.

Moreover, when the throttle opening degree TVO is extremely small (TVO ≦ TVO1, including a coast travel of TVO = 0) where the influence on the fuel efficiency is small, since the offset amount $\alpha$ is always the large value, a problem caused by the individual variations of the hydraulic control unit 7 can also be solved.

On the other hand, when the throttle opening degree TVO is a certain value or greater (TVO > TVO1) where the influence on the fuel efficiency is large, since the offset amount $\alpha$ is 0 or small in a case except around the cross point of the primary pressure Ppri, the secondary pressure Psec and the line pressure Plin at the coast down, a good fuel efficiency can be secured.

[Others]

Although the present invention is explained above, the present invention includes all design modifications and equivalents belonging to the technical scope of the present invention. For instance, in the above embodiment, the offset amounts $\gamma$ and $\alpha$ are the same value, and a maximum value of the offset amount $\beta$ is the same value as the offset amounts $\gamma$ and $\alpha$. However, these values could be set individually.

Further, the device could be configured to take measures to suppress only the fluctuation (variation) of the engine speed without suppressing the hunting of the transmission ratio at the auto-up and the hunting of the transmission ratio at the coast down.

**Claims**

1. A control device for a continuously variable transmission mounted in a vehicle, the continuously variable transmission having an input side primary pulley inputting power from an engine, an output side secondary pulley and a power transmission member wound around these pulleys, the device comprising:

   a secondary pressure control unit configured to set a secondary pressure target value that is a target value of a secondary pressure supplied to the secondary pulley on the basis of a required torque transmission capacity and to control the secondary pressure according to the secondary pressure target value;
   a primary pressure control unit configured to set a primary pressure target value that is a target value of a primary pressure supplied to the primary pulley on the basis of a target transmission ratio and to control the primarypressure according to the primary pressure target value; and
   a line pressure control unit configured to set, as a line pressure target value that is a target value of a line pressure, greater one of a secondary pressure comparison reference value corresponding to the secondary pressure target value and a primary pressure comparison reference value corresponding to the primary pressure target value and to control the line pressure according to the line pressure target value, and
   the line pressure control unit configured to set, at a vehicle constant speed travel control, the line pressure target value with a value obtained by adding a first offset amount to the secondary pressure target value being the secondary pressure comparison reference value and a value obtained by adding a second offset amount to the primary pressure target value being the primary pressure comparison reference value.

2. The control device for the continuously variable transmission as claimed in claim 1, wherein:

   except when executing the vehicle constant speed travel control, at least one of the secondary pressure comparison reference value and the primary pressure comparison reference value is set to be smaller than a value when executing the constant speed travel control.

3. The control device for the continuously variable transmission as claimed in claim 1 or 2, wherein:

   the line pressure control unit is configured such that, except when executing the vehicle constant speed travel control, a value obtained by adding the first offset amount to the secondary pressure target value is the secondary pressure comparison reference value, and a value obtained by adding the second offset amount that is equal to or less than the first offset amount and includes 0 to the primary pressure target value is the primary pressure comparison reference value.

4. The control device for the continuously variable transmission as claimed in any one of the preceding claims 1 to 3, wherein:

   in a case where a difference between the secondary pressure target value and the primary pressure target value is equal to or greater than a predetermined value at a vehicle drive travel in which the power is inputted to the primary pulley, the line pressure target value is set with the second offset amount being 0 and the primary pressure target value itself being the primary pressure comparison reference value.

5. The control device for the continuously variable transmission as claimed in any one of the preceding claims 1 to 4, wherein:

in a case of a vehicle coast travel in which the power is not inputted to the primary pulley, or in a case where the difference is equal to or less than the predetermined value at the vehicle drive travel, the second offset amount is set to a value that is greater than 0.

6. The control device for the continuously variable transmission as claimed in any one of the preceding claims 1 to 5, wherein:

the line pressure control unit is configured such that, at the vehicle constant speed travel control, the offset amount to calculate the secondary pressure comparison reference value and the offset amount to calculate the primary pressure comparison reference value are a same value as each other.

7. The control device for the continuously variable transmission as claimed in any one of the preceding claims 1 to 6, wherein:

a chain is used as the power transmission member, and the continuously variable transmission is configured as a chain-type continuously variable transmission.

# FIG.1

# FIG.2

# FIG.3

CONSTANT SPEED TRAVEL CONTROL OPERATION OFFSET AMOUNT γ

CONSTANT SPEED TRAVEL CONTROL OPERATION SIGNAL

NORMAL OPERATION OFFSET AMOUNT α

SECONDARY PRESSURE TARGET VALUE Psec_tg

CHANGE AMOUNT LIMIT

SECONDARY PRESSURE COMPARISON REFERENCE VALUE Psec_b

CONSTANT SPEED TRAVEL CONTROL OPERATION OFFSET AMOUNT γ

CONSTANT SPEED TRAVEL CONTROL OPERATION SIGNAL

NORMAL OPERATION OFFSET AMOUNT β

PRIMARY PRESSURE TARGET VALUE Ppri_tg

CHANGE AMOUNT LIMIT

PRIMARY PRESSURE COMPARISON REFERENCE VALUE Ppri_b

MAX

LINE PRESSURE TARGET VALUE Plin_tg

EP 3 306 144 A1

## FIG.4

## FIG.5

# FIG.6

EP 3 306 144 A1

## FIG.7A

Low | High | Low

Plin_tg
Plin_r
Psec_tg
Ppri_tg
Psec_r
Ppri_r

## FIG.7B

High

Plin_tg
Plin_r
Psec_tg
Ppri_tg
Psec_r
Ppri_r

## FIG.8

Plin_tg
Plin_r
Psec_tg
Ppri_tg
Psec_r
Ppri_r

# FIG.9

START

S10 — CONSTANT SPEED TRAVEL CONTROL IS IN OPERATION ?
— NO
— YES

S20 — OFFSET AMOUNT $\gamma$ (CONSTANT VALUE)

S110 — OFFSET AMOUNT $\alpha$ (CONSTANT VALUE)

S30 — CHANGE AMOUNT LIMIT

S120 — CHANGE AMOUNT LIMIT

S40 — Psec_b = Psec_tg + $\gamma$

S130 — Psec_b1 = Psec_tg + $\alpha$

S50 — Ppri_b = Ppri_tg + $\gamma$

TVO $\leq$ TVO1 ? — NO — S140
— YES

S60 — MAX (Psec_b, Ppri_b)

S150 — OFFSET AMOUNT $\beta$ (CONSTANT VALUE)

S160 — OFFSET AMOUNT $\beta$ (VALUE ACCORDING TO DIFFERENCE)

S170 — CHANGE AMOUNT LIMIT

S180 — Ppri_b = Ppri + $\beta$

S190 — MAX (Psec_b, Ppri_b)

S70 — Plin_tg

END

## INTERNATIONAL SEARCH REPORT

| | International application No. |
|---|---|
| | PCT/JP2016/064542 |

### A. CLASSIFICATION OF SUBJECT MATTER
*F16H61/02*(2006.01)i, *F16H61/662*(2006.01)i

According to International Patent Classification (IPC) or to both national classification and IPC

### B. FIELDS SEARCHED

Minimum documentation searched (classification system followed by classification symbols)
F16H61/02, F16H61/662

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | WO 2013/145967 A1 (JATCO Ltd.),<br>03 October 2013 (03.10.2013),<br>paragraphs [0020] to [0062], [0064]; fig. 1 to 7<br>& US 2015/0080156 A1<br>paragraphs [0033] to [0075], [0077]; fig. 1 to 7<br>& EP 2833027 A1     & CN 104185751 A<br>& KR 10-2014-0136461 A | 1,3-5,7<br>2,6 |
| Y<br>A | JP 2007-247862 A (Fuji Heavy Industries Ltd.),<br>27 September 2007 (27.09.2007),<br>paragraphs [0020] to [0022]; fig. 3<br>(Family: none) | 1,3-5,7<br>2,6 |

[×] Further documents are listed in the continuation of Box C.     [ ] See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 05 August 2016 (05.08.16) | 16 August 2016 (16.08.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2016/064542 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | Microfilm of the specification and drawings annexed to the request of Japanese Utility Model Application No. 127759/1987(Laid-open No. 32958/1989) (Toyota Motor Corp.), 01 March 1989 (01.03.1989), specification, page 35, line 1 to page 39, line 5; fig. 11 to 13 (Family: none) | 1-7 |
| A | JP 5-99302 A (Toyota Motor Corp.), 20 April 1993 (20.04.1993), paragraphs [0042] to [0043]; fig. 9 to 10 (Family: none) | 1-7 |
| A | JP 2010-43676 A (Toyota Motor Corp.), 25 February 2010 (25.02.2010), paragraphs [0053] to [0057]; fig. 2 (Family: none) | 1-7 |
| A | JP 2007-278498 A (JATCO Ltd.), 25 October 2007 (25.10.2007), paragraphs [0070] to [0080]; fig. 12 & US 2007/0232423 A1 paragraphs [0109] to [0122]; fig. 12 | 1-7 |

Form PCT/ISA/210 (continuation of second sheet) (January 2015)

**EP 3 306 144 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010223281 A